# EUROPEAN PATENT APPLICATION

(11) **EP 4 438 292 A1**
(43) Date of publication of application: **02.10.2024**
(21) Application number: 24165793.1
(22) Date of filing: 25.03.2024
(51) Int. Cl.: B32B 7/12, B32B 27/12, B32B 27/16, B32B 27/32, D06N 3/14

(54) **ARTIFICIAL LEATHER AND METHOD FOR MANUFACTURING THE SAME**

(30) Priority: 31.03.2023 TW 112112563
(71) Applicant: San Fang Chemical Industry Co., Ltd., Kaohsiung City (TW)
(72) Inventor: LIN, Chih-Yi, Kaohsiung City (TW); CHENG, Kuo-Kuang, Kaohsiung City (TW); HUANG, Chien-Chia, Kaohsiung City (TW); CHIANG, Chi-Chin, Kaohsiung City (TW); TAI, Wen-Hsin, Kaohsiung City (TW); LEE, Chieh, Kaohsiung City (TW); CHEN, Yu-Lun, Kaohsiung City (TW); LIU, Yu Hung, Kaohsiung City (TW)
(74) Representative: 2K Patentanwälte Blasberg Kewitz & Reichel

(57) **Abstract**

An artificial leather and a method for manufacturing the artificial leather are provided. The artificial leather includes a fabric layer, a thermoplastic polyolefin layer, a modified thermoplastic polyolefin layer, and a polyurethane surface layer. The thermoplastic polyolefin layer is disposed on the fabric layer. The modified thermoplastic polyolefin layer is disposed on the thermoplastic polyolefin layer. The polyurethane surface layer is attached to the modified thermoplastic polyolefin layer through an adhesive.

## Description

### BACKGROUND

### 1. Field of the Disclosure

The present disclosure relates to an artificial leather and a manufacturing method, and to an artificial leather including a modified thermoplastic polyolefin layer, and a method for manufacturing the artificial leather.

### 2. Description of the Related Art

As environmental protection requirements increase year on year in countries around the world, regulations on emissions (e.g., carbon emissions, volatile organic compounds, etc.) of many stuff in the manufacturing process are becoming stricter to reduce the pollution caused to the environment. However, the materials used in manufacturing artificial leather are known to have relatively high carbon emissions and cause relatively high energy consumption. In addition, the structure of conventional artificial leather does not allow the surface to be multi-variable. In order to maintain the adhesion between layers, it is necessary to use materials with the same properties for processing, so the processability is greatly limited.

### SUMMARY

In some embodiments, an artificial leather includes a fabric layer, a thermoplastic polyolefin layer, a modified thermoplastic polyolefin layer, and a polyurethane surface layer. The thermoplastic polyolefin layer is disposed on the fabric layer. The modified thermoplastic polyolefin layer is disposed on the thermoplastic polyolefin layer. The polyurethane surface layer is attached to the modified thermoplastic polyolefin layer through an adhesive.

In some embodiments, an artificial leather includes a fabric layer, a modified thermoplastic polyolefin layer, a thermoplastic polyurethane layer, and a polyurethane surface layer. The modified thermoplastic polyolefin layer is disposed on the fabric layer. The thermoplastic polyurethane layer is disposed on the modified thermoplastic polyolefin layer. The polyurethane surface layer is attached to the thermoplastic polyurethane layer through an adhesive.

In some embodiments, a method for manufacturing an artificial leather includes: providing a fabric layer; forming a laminated structure on the fabric layer, wherein the laminated structure includes a modified thermoplastic polyolefin layer; and attaching a polyurethane surface layer to the laminated structure through an adhesive.

### BRIEF DESCRIPTION OF THE DRAWINGS

Aspects of some embodiments of the present disclosure are readily understood from the following detailed description when read with the accompanying figures. It is noted that various structures may not be drawn to scale, and dimensions of the various structures may be arbitrarily increased or reduced for clarity of discussion.
FIG. 1 illustrates a schematic cross-sectional view of an artificial leather according to some embodiments of the present disclosure.
FIG. 2 illustrates a schematic cross-sectional view of an artificial leather according to some embodiments of the present disclosure.
FIG. 3 illustrates a schematic cross-sectional view of an artificial leather according to some embodiments of the present disclosure.
FIG. 4 illustrates a schematic view of one or more stages of some embodiments of a method for manufacturing an artificial leather according to the present disclosure.
FIG. 5 illustrates a schematic view of one or more stages of some embodiments of a method for manufacturing an artificial leather according to the present disclosure.
FIG. 6 illustrates a schematic view of one or more stages of some embodiments of a method for manufacturing an artificial leather according to the present disclosure.

### DETAILED DESCRIPTION

Common reference numerals are used throughout the drawings and the detailed description to indicate the same or similar components. Embodiments of the present disclosure will be readily understood from the following detailed description taken in conjunction with the accompanying drawings.

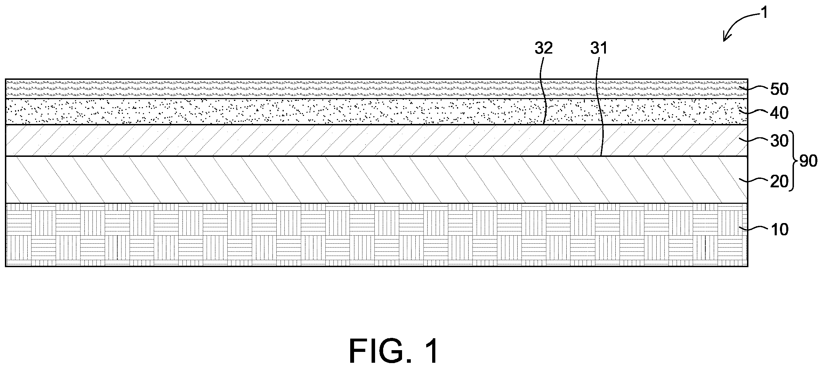

FIG. 1 illustrates a schematic cross-sectional view of an artificial leather 1 according to some embodiments of the present disclosure. In some embodiments, as shown in FIG. 1, the artificial leather 1 may include a fabric layer 10, a thermoplastic polyolefin layer 20, a modified thermoplastic polyolefin layer 30, an adhesive 40, and a polyurethane surface layer 50. In some embodiments, the fabric layer 10 may include, but is not limited to, nonwoven fabric.

The thermoplastic polyolefin layer 20 may be disposed on the fabric layer 10. In some embodiments, a thickness of the thermoplastic polyolefin layer 20 may be less than or equal to a thickness of the fabric layer 10.

The modified thermoplastic polyolefin layer 30 may be disposed on the thermoplastic polyolefin layer 20. Therefore, the modified thermoplastic polyolefin layer 30 and the thermoplastic polyolefin layer 20 may constitute a laminated structure 90. In some embodiments, the modified thermoplastic polyolefin layer 30 may be a blend including thermoplastic polyolefin and maleic anhydride for the purpose of modifying the thermoplastic polyolefin by the maleic anhydride such that an adhesiveness of the modified thermoplastic polyolefin layer 30 may be greater than an adhesiveness of the thermoplastic polyolefin layer 20. In some embodiments, a total weight of the modified thermoplastic polyolefin layer 30 is calculated as 100wt%, and a content of the maleic anhydride may be 3wt% to 50wt%. When the content of the maleic anhydride is below 3wt%, it will cause abnormality in the polyurethane surface layer 50 and result in a peeling strength between the modified thermoplastic polyolefin layer 30 and the polyurethane surface layer 50 that is lower than 1kg/cm, making it unsuitable for shoe manufacturing. When the content of the maleic anhydride is above 50wt%, it will result in poor film-forming properties of the modified thermoplastic polyolefin layer 30 and a lack of processability. In some embodiments, the content of the maleic anhydride may be 20wt% to 40wt%, 22wt% to 38wt%, 24wt% to 36wt%, 26wt% to 34wt%, or 28wt% to 32wt%. Furthermore, in some embodiments, a thickness of the modified thermoplastic polyolefin layer 30 may be less than or equal to the thickness of the thermoplastic polyolefin layer 20.

In some embodiments, as shown in FIG. 1, the modified thermoplastic polyolefin layer 30 has a first surface (e.g., a bottom surface) 31 and a second surface (e.g., a top surface) 32. The first surface 31 may contact the thermoplastic polyolefin layer 20. The second surface 32 is opposite to the first surface 31. In some embodiments, the second surface 32 may be a corona discharge processing surface.

The adhesive 40 may be a non-solvent-based adhesive or a solvent-based adhesive (solvent content may be 5%, 10%, 15%, 20%, 25%, 30%, 35%, 40%, 45%, 50%, 55%, 60%, 65% or 70%). In some embodiments, the adhesive 40 may include, but is not limited to, one of the following: solvent-based polyurethane resin, water-based polyurethane resin, thermoplastic polyurethane resin, ethylene-vinyl acetate copolymer adhesive, polyvinyl chloride adhesive, polyolefin adhesive, and epoxy resin adhesive. In some embodiments, a thickness of the adhesive 40 may be less than or equal to the thickness of the modified thermoplastic polyolefin layer 30.

The polyurethane surface layer 50 may be attached to the modified thermoplastic polyolefin layer 30 (e.g., the second surface (i.e., the corona discharge processing surface) 32) through the adhesive 40. Thus, as shown in FIG. 1, the adhesive 40 may be disposed between the polyurethane surface layer 50 and the modified thermoplastic polyolefin layer 30 (e.g., the second surface (i.e., the corona discharge processing surface) 32). In some embodiments, the polyurethane surface layer 50 may be a water-based polyurethane surface layer. Additionally, in some embodiments, the polyurethane surface layer 50 may be coated with a release paper (not shown in the figures) to transfer a texture. In some embodiments, a thickness of the polyurethane surface layer 50 may be less than or equal to the thickness of the adhesive 40.

The artificial leather 1 of the present disclosure utilizes the modified thermoplastic polyolefin layer 30 for lamination, which provides better adhesiveness. The the corona discharge processing surface (i.e., the second surface 32) of the modified thermoplastic polyolefin layer 30 may further improve surface adhesiveness and enhance the processability of the overall material. It also makes the artificial leather 1 easier to shape, thereby meeting the relevant physical property requirements of shoemaking and its diverse needs. Additionally, using the thermoplastic polyolefin layer 20 and the modified thermoplastic polyolefin layer 30 in the artificial leather 1 of the present disclosure may reduce carbon emissions and minimize energy consumption during the manufacturing process.

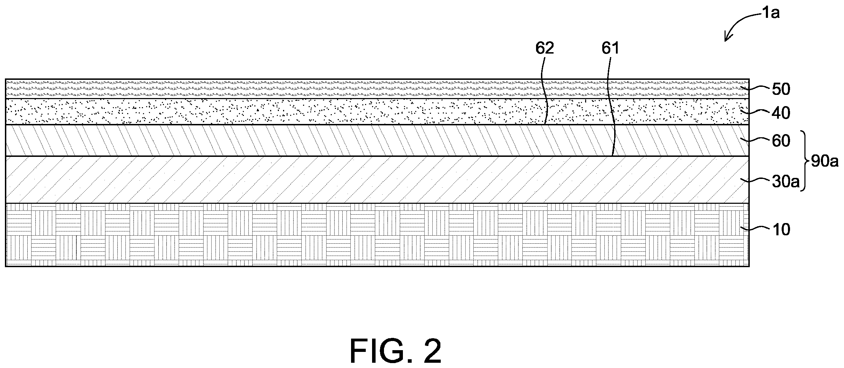

FIG. 2 illustrates a schematic cross-sectional view of an artificial leather 1a according to some embodiments of the present disclosure. The artificial leather 1a of FIG. 2 is similar to the artificial leather 1 of FIG. 1, except for a laminated structure 90a of the artificial leather 1a of FIG. 2. In some embodiments, as shown in FIG. 2, the laminated structure 90a may include a modified thermoplastic polyolefin layer 30a and a thermoplastic polyurethane layer 60.

The modified thermoplastic polyolefin layer 30a may be disposed on the fabric layer 10. In some embodiments, the fabric layer 10 of FIG. 2 may be the same as the fabric layer 10 of FIG. 1, and the modified thermoplastic polyolefin layer 30a of FIG. 2 may be the same as the modified thermoplastic polyolefin layer 30 of FIG. 1. In some embodiments, a thickness of the modified thermoplastic polyolefin layer 30a may be less than or equal to the thickness of the fabric layer 10.

The thermoplastic polyurethane layer 60 may be disposed on the modified thermoplastic polyolefin layer 30a. In some embodiments, a thickness of the thermoplastic polyurethane layer 60 may be less than or equal to the thickness of the modified thermoplastic polyolefin layer 30a.

In some embodiments, as shown in FIG. 2, the thermoplastic polyurethane layer 60 has a first surface (e.g., a bottom surface) 61 and a second surface (e.g., a top surface) 62. The first surface 61 may contact the modified thermoplastic polyolefin layer 30a. The second surface 62 is opposite to the first surface 61. In some embodiments, the second surface 62 may be a corona discharge processing surface.

Based on the above configurations, the polyurethane surface layer 50 may be attached to the thermoplastic polyurethane layer 60 (e.g., the second surface (i.e., the corona discharge processing surface) 62) through the adhesive 40. Thus, as shown in FIG. 2, the adhesive 40 may be disposed between the polyurethane surface layer 50 and the thermoplastic polyurethane layer 60 (e.g., the second surface (i.e., the corona discharge processing surface) 62). In some embodiments, a thickness of the adhesive 40 may be less than or equal to the thickness of the thermoplastic polyurethane layer 60.

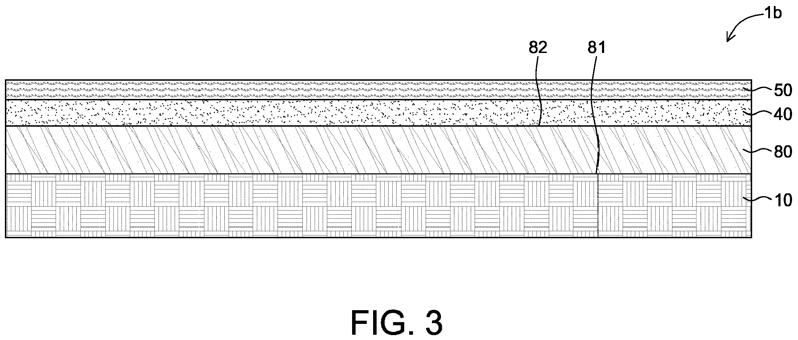

FIG. 3 illustrates a schematic cross-sectional view of an artificial leather 1b according to some embodiments of the present disclosure. The artificial leather 1b of FIG. 3 is similar to the artificial leather 1a of FIG. 2, except for a modified blend layer 80 of the artificial leather 1b of FIG. 3. In some embodiments, the modified blend layer 80 of FIG. 3 may be a blend layer of the modified thermoplastic polyolefin layer 30a of FIG. 2 and the thermoplastic polyurethane layer 60 of FIG. 2. That is, the modified blend layer 80 of FIG. 3 may be a blend including thermoplastic polyolefin, maleic anhydride and thermoplastic polyurethane. In addition, the modified blend layer 80 of FIG. 3 may be a single-layer structure, different from the laminated structure 90a of FIG. 2.

In some embodiments, as shown in FIG. 3, the modified blend layer 80 has a first surface (e.g., a bottom surface) 81 and a second surface (e.g., a top surface) 82. The first surface 81 may contact the fabric layer 10. The second surface 82 is opposite to the first surface 81. In some embodiments, the second surface 82 may be a corona discharge processing surface. Furthermore, in some embodiments, the fabric layer 10 of FIG. 3 may be the same as the fabric layer 10 of FIG. 2. A thickness of the modified blend layer 80 may be less than or equal to the thickness of the fabric layer 10.

Based on the above configurations, the polyurethane surface layer 50 may be attached to the modified blend layer 80 (e.g., the second surface (i.e., the corona discharge processing surface) 82) through the adhesive 40. Therefore, as shown in FIG. 3, the adhesive 40 may be disposed between the polyurethane surface layer 50 and the modified blend layer 80 (e.g., the second surface (i.e., the corona discharge processing surface) 82). In some embodiments, the adhesive 40 of FIG. 3 may be the same as the adhesive 40 of FIG. 2. The polyurethane surface layer 50 of FIG. 3 may be the same as the polyurethane surface layer 50 of FIG. 2. In some embodiments, a thickness of the adhesive 40 may be less than or equal to the thickness of the modified blend layer 80.

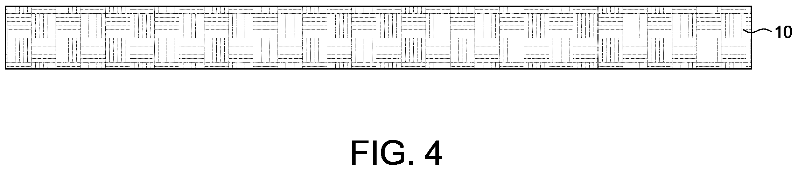

FIG. 4 through FIG. 5 illustrate a method for manufacturing an artificial leather according to some embodiments of the present disclosure. In some embodiments, the method is for manufacturing the artificial leather 1 of FIG. 1.

Referring to FIG. 4, a fabric layer 10 is provided. The fabric layer 10 of FIG. 4 may be the same as the fabric layer 10 of FIG. 1.

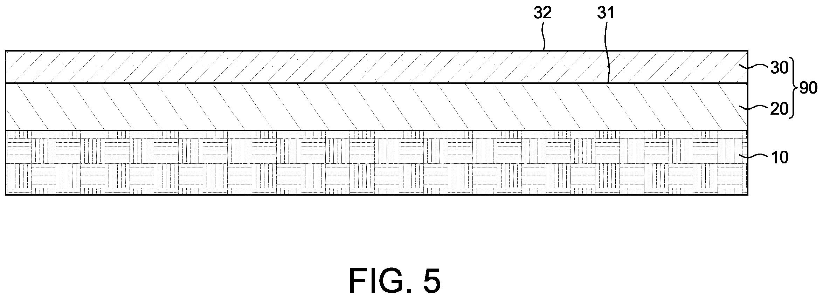

Referring to FIG. 5, a laminated structure 90 is formed on the fabric layer 10. The laminated structure 90 of FIG. 5 may be the same as the laminated structure 90 of FIG. 1. Therefore, the laminated structure 90 of FIG. 5 may include the thermoplastic polyolefin layer 20 of FIG. 1 and the modified thermoplastic polyolefin layer 30 of FIG. 1. In some embodiments, steps of forming the laminated structure 90 may include co-extruding the modified thermoplastic polyolefin layer 30 and the thermoplastic polyolefin layer 20 through a T-shaped co-extrusion die (not shown in the figures) to form the laminated structure 90. In some embodiments, the modified thermoplastic polyolefin layer 30 may be a blend including thermoplastic polyolefin and maleic anhydride. In some embodiments, a total weight of the modified thermoplastic polyolefin layer 30 is calculated as 100wt%, and a content of the maleic anhydride may be 3wt% to 50wt%. In some embodiments, a water content of the maleic anhydride may be 250PPM to 50PPM. When the water content of the maleic anhydride is higher than 250PPM, it can easily lead to poor film formation of the T-shaped co-extrusion die and cause holes and depressions due to water evaporation during the thermal processing of the finished product. When the water content of the maleic anhydride is lower than 50PPM, the drying time required is too long, which contradicts the purpose of reducing carbon emissions and energy consumption in the present disclosure.

In some embodiments, as shown in FIG. 5, after forming the laminated structure 90 (including, for example, the modified thermoplastic polyolefin layer 30 and the thermoplastic polyolefin layer 20), the method may further include performing a corona discharge processing on a surface (e.g., the second surface 32) of the modified thermoplastic polyolefin layer 30 to improve surface polarities of the modified thermoplastic polyolefin layer 30. In some embodiments, a processing current of the corona discharge processing may be 3KW to 4.5KW, and a processing speed of the corona discharge processing may be 2.5m/min to 5m/min. When the processing current is below 3KW and the processing speed is above 5m/min, it is easy for the dyne to fail to meet the standard (it must be above 42). When the processing current is above 4.5KW and the processing speed is below 2.5m/min, it is easy for the material surface not to withstand the load, resulting in the material being pierced by the arc.

Referring to FIG. 1, a polyurethane surface layer 50 is attached to the laminated structure 90 (e.g., the modified thermoplastic polyolefin layer 30) through an adhesive 40 to obtain the artificial leather 1 of FIG. 1.

Before attaching the polyurethane surface layer 50, the present disclosure's application of corona discharge processing to the modified thermoplastic polyolefin layer 30 may improve its surface adhesiveness so that it can be well attached to the polyurethane surface layer 50 through the adhesive 40, thereby achieving changes in surface texture and color to meet the diverse needs of shoemaking.

In addition, the current processing temperature requirement for embossing artificial leather is about 220°C to 240°C. In contrast, the composition materials of the artificial leather 1 in the present disclosure can be surface embossed at 170°C to 190°C, which may reduce the overall processing temperature requirement and achieve energy-saving and carbon-reduction effects.

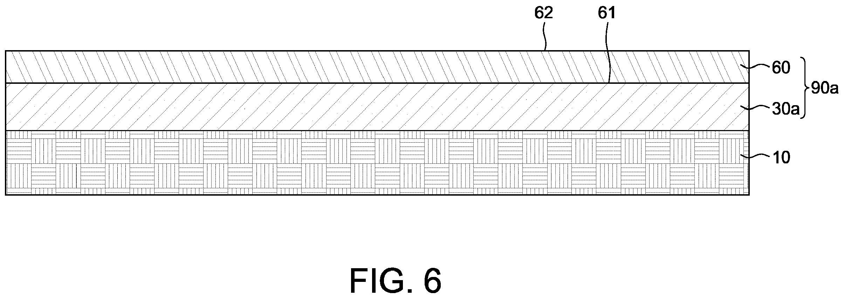

FIG. 6 illustrates a schematic view of one or more stages of some embodiments of a method for manufacturing an artificial leather according to the present disclosure. In some embodiments, the method is for manufacturing the artificial leather 1b of FIG. 2. The initial stage of the illustrated process is the same as, or similar to, the stage depicted in FIG. 4 for manufacturing the artificial leather 1 of FIG. 1. FIG. 6 depicts a stage subsequent to that depicted in FIG. 4.

Referring to FIG. 6, a laminated structure 90a is formed on the fabric layer 10. The laminated structure 90a of FIG. 6 may be the same as the laminated structure 90a of FIG. 2. Therefore, the laminated structure 90a of FIG. 6 may include the thermoplastic polyurethane layer 60 of FIG. 2 and the modified thermoplastic polyolefin layer 30a of FIG. 2. In some embodiments, steps of forming the laminated structure 90a may include co-extruding the modified thermoplastic polyolefin layer 30a and the thermoplastic polyurethane layer 60 through a T-shaped co-extrusion die (not shown in the figures) to form the laminated structure 90a. In some embodiments, the modified thermoplastic polyolefin layer 30a may be a blend including thermoplastic polyolefin and maleic anhydride. In some embodiments, a total weight of the modified thermoplastic polyolefin layer 30a is calculated as 100wt%, and a content of the maleic anhydride may be 3wt% to 50wt%. In some embodiments, a water content of the maleic anhydride may be 250PPM to 50PPM.

Referring to FIG. 2, a polyurethane surface layer 50 is attached to the laminated structure 90a (e.g., the thermoplastic polyurethane layer 60) through an adhesive 40 to obtain the artificial leather 1a of FIG. 2.

The present disclosure is illustrated in detail with the following embodiments, but it does not mean that the present disclosure is only limited to the content disclosed by these embodiments.

### [Embodiment 1]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 2]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 3]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 4]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) A water-based polyurethane (PU) material is coated on a release paper (RP) to transfer the texture, and then the water-based PU material is attached to the semi-finished product of the environmentally friendly artificial leather through a solvent-based adhesive (solvent content 65%). After curing, remove the RP to obtain a finished product of the environmentally friendly artificial leather.

### [Embodiment 5]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 65%). After curing, remove the RP to obtain a finished product of the environmentally friendly artificial leather.

### [Embodiment 6]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 65%). After curing, remove the RP to obtain a finished product of the environmentally friendly artificial leather.

### [Embodiment 7]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 8]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 9]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 10]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a non-solvent-based adhesive. After curing, remove the RP to obtain a finished product of the environmentally friendly artificial leather.

### [Embodiment 11]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a non-solvent-based adhesive. After curing, remove the RP to obtain a finished product of the environmentally friendly artificial leather.

### [Embodiment 12]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a non-solvent-based adhesive. After curing, remove the RP to obtain a finished product of the environmentally friendly artificial leather.

### [Embodiment 13]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 6 5 %). After curing, remove the RP to obtain a finished product of the environmentally friendly artificial leather.

### [Embodiment 14]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 6 5 %). After curing, remove the RP to obtain a finished product of the environmentally friendly artificial leather.

### [Embodiment 15]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 6 5 %). After curing, remove the RP to obtain a finished product of the environmentally friendly artificial leather.

### [Embodiment 16]

### (1) Extruder setting parameters

Thermoplastic polyolefin (100wt%) of composition A is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(2) Adjust the rotational speeds of metering pumps on the A-axis and B-axis portions to enable a thickness ratio of 1:3 between an upper layer (composition A) and a lower layer (composition B).

(3) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(4) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 35%). After curing, remove the RP to obtain a finished product of the environmentally friendly artificial leather.

### [Embodiment 17]

(1) Drying conditions
   A water content of maleic anhydride of composition C is controlled at 250PPM to 50PPM.
(2) Extruder setting parameters

A blend including thermoplastic polyolefin (70wt%) of composition A and maleic anhydride (30wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180 °C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 35%). After curing, remove the RP to obtain a finished product of the environmentally friendly artificial leather.

### [Embodiment 18]

(1) Drying conditions
   A water content of maleic anhydride of composition C is controlled at 250PPM to 50PPM.
(2) Extruder setting parameters

A blend including thermoplastic polyolefin (50wt%) of composition A and maleic anhydride (50wt%) of composition C is put into an A-axis portion of the extruder, and the extruder's temperature is set to 170°C, 190°C, 185°C, and 180°C in sequence.

Thermoplastic polyolefin (100wt%) of composition B is put into a B-axis portion of the extruder, and the extruder's temperature is set to 180°C, 200°C, 190°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (blend including composition A and composition C) and a lower layer (composition B).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) After performing a corona discharge processing on a surface of the semi-finished product of the environmentally friendly artificial leather, a water-based polyurethane (PU) material is coated on a release paper (RP) to transfer the texture. Then, the water-based PU material is attached to the semi-finished product of the environmentally friendly artificial leather after the corona discharge processing through a solvent-based adhesive (solvent content 35%). After curing, remove the RP to obtain a finished product of the environmentally friendly artificial leather.

### [Embodiment 19]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 1 80°C, 200°C, 190°C, and 180°C in sequence.

A blend including thermoplastic polyolefin (90wt%) of composition B and maleic anhydride (10wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 20]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 1 80°C, 200°C, 190°C, and 180°C in sequence.

A blend including thermoplastic polyolefin (80wt%) of composition B and maleic anhydride (20wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 21]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 1 80°C, 200°C, 190°C, and 180°C in sequence.

A blend including thermoplastic polyolefin (70wt%) of composition B and maleic anhydride (30wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 22]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 1 80°C, 200°C, 190°C, and 180°C in sequence.

A blend including thermoplastic polyolefin (90wt%) of composition B and maleic anhydride (10wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 23]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 180°C, 200°C, 190°C, and 180°C in sequence.

A blend including thermoplastic polyolefin (80wt%) of composition B and maleic anhydride (20wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 24]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

Thermoplastic polyurethane (100wt%) of composition A is put into an A-axis portion of the extruder, and the extruder's temperature is set to 1 80°C, 200°C, 190°C, and 180°C in sequence.

A blend including thermoplastic polyolefin (70wt%) of composition B and maleic anhydride (30wt%) of composition C is put into a B-axis portion of the extruder, and the extruder's temperature is set to 170°C, 190°C, 185°C, and 180°C in sequence.

The set temperature of the T-shaped co-extrusion die is 180°C.

(3) Adjust the rotational speeds of metering pumps on the A-axis and B-axis portions to enable a thickness ratio of 1:3 between an upper layer (composition A) and a lower layer (blend including composition B and composition C).

(4) The materials in the A-axis and B-axis portions are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 25]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (48wt%) of composition A, thermoplastic polyolefin (48wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 26]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (32wt%) of composition A, thermoplastic polyolefin (64wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 27]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (64wt%) of composition A, thermoplastic polyolefin (32wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a non-solvent-based adhesive. After curing, remove the RP to obtain a finished product of the environmentally friendly artificial leather.

### [Embodiment 28]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (48wt%) of composition A, thermoplastic polyolefin (48wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 29]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (32wt%) of composition A, thermoplastic polyolefin (64wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

### [Embodiment 30]

### (1) Drying conditions

A water content of thermoplastic polyurethane of composition A is controlled at 250PPM to 50PPM.

A water content of maleic anhydride of composition C is controlled at 250PPM to 50PPM.

### (2) Extruder setting parameters

A blend including thermoplastic polyurethane (64wt%) of composition A, thermoplastic polyolefin (32wt%) of composition B and maleic anhydride (4wt%) of composition C is put into an A-axis portion of the extruder, and the extruder's temperature is set to 180°C, 200°C, 190°C, and 180°C in sequence.

The set temperature of the T-shaped co-extrusion die is 180°C.

(3) Adjust the rotational speed of the metering pump on the A-axis portion.

(4) The materials in the A-axis portion are co-extruded to form a film through the T-shaped co-extrusion die. The film is pressed by a forming wheel and a silicone rubber wheel and then poured onto a nonwoven fabric. The forming wheel's line speed is set to 3 m/min. After cooling and shaping through the forming wheel, a semi-finished product of environmentally friendly artificial leather can be obtained.

(5) A water-based polyurethane (PU) material is coated on a release paper (RP) to transfer the texture, and then the water-based PU material is attached to the semi-finished product of the environmentally friendly artificial leather through a solvent-based adhesive (solvent content 3 5%). After curing, remove the RP to obtain a finished product of the environmentally friendly artificial leather.

As mentioned above, the artificial leathers of Embodiments 1 to 18 correspond to the artificial leather 1 of FIG. 1, the artificial leathers of Embodiments 19 to 24 correspond to the artificial leather 1a of FIG. 2, and the artificial leathers of Embodiments 25 to 30 correspond to the artificial leather 1b of FIG. 3. The peeling strength test results of Embodiments 1 to 30 are summarized in Table 1 below. From the results in Table 1, it can be found that the peeling strength of Embodiments 11, 12, 14, 15, 20, 21, 23 and 24 can all reach more than 4.5 Kg/2.54 cm. Among them, the peeling strength of Embodiments 11 and 24 can even reach 7.1 Kg/2.54 cm.

**Table 1. Peeling strength test results of Embodiments 1 to 30.**

| | | Embodiment 1 | Embodiment 2 | Embodiment 2 |
|---|---|---|---|---|
| Content of composition C (wt%) | | 0 | 30 | 50 |
| PU surface layer | | Water-based PU | | |
| Adhesive selection | | Non-solvent-based adhesive | | |
| Corona discharge processing | | X | X | X |
| Test item | Unit | Results | | |
| Peeling strength | Kg/2.54 cm | X | 2.6 | 3.5 |
| | | | | |

| | | Embodiment 4 | Embodiment 5 | Embodiment 6 |
|---|---|---|---|---|
| Content of composition C (wt%) | | 0 | 30 | 50 |
| PU surface layer | | Water-based PU | | |
| Adhesive selection | | Solvent-based adhesive (solvent content 65%) | | |
| Corona discharge processing | | X | X | X |
| Test item | Unit | Results | | |
| Peeling strength | Kg/2.54 cm | X | 2 | 1.7 |

| | | Embodiment 7 | Embodiment 8 | Embodiment 9 |
|---|---|---|---|---|
| Content of composition C (wt%) | | 0 | 30 | 50 |
| PU surface layer | | Water-based PU | | |
| Adhesive selection | | Solvent-based adhesive (solvent content 35%) | | |
| Corona discharge processing | | X | X | X |
| Test item | Unit | Results | | |
| Peeling strength | Kg/2.54 cm | X | 1.3 | 1.4 |
| | | | | |

| | | Embodiment 10 | Embodiment 11 | Embodiment 12 |
|---|---|---|---|---|
| Content of composition C (wt%) | | 0 | 30 | 50 |
| PU surface layer | | Water-based PU | | |
| Adhesive selection | | Non-solvent-based adhesive | | |
| Corona discharge processing | | O | O | O |
| Test item | Unit | Results | | |
| Peeling strength | Kg/2.54 cm | 0.5 | 7.1 | 5.7 |
| | | | | |

| | | Embodiment 13 | Embodiment 14 | Embodiment 15 |
|---|---|---|---|---|
| Content of composition C (wt%) | | 0 | 30 | 50 |
| PU surface layer | | Water-based PU | | |
| Adhesive selection | | Solvent-based adhesive (solvent content 65%) | | |
| Corona discharge processing | | O | O | O |
| Test item | Unit | Results | | |
| Peeling strength | Kg/2.54 cm | 3.4 | 5.4 | 5.2 |
| | | | | |

| | | Embodiment 16 | Embodiment 17 | Embodiment 18 |
|---|---|---|---|---|
| Content of composition C (wt%) | | 0 | 30 | 50 |
| PU surface layer | | Water-based PU | | |
| Adhesive selection | | Solvent-based adhesive (solvent content 35%) | | |
| Corona discharge processing | | O | O | O |
| Test item | Unit | Results | | |
| Peeling strength | Kg/2.54 cm | 1.7 | 3.7 | 2.5 |
| | | | | |

| | | Embodiment 19 | Embodiment 20 | Embodiment 21 |
|---|---|---|---|---|
| Content of composition C (wt%) | | 10 | 20 | 30 |
| PU surface layer | | Water-based PU | | |
| Adhesive selection | | Solvent-based adhesive (solvent content 35%) | | |
| Corona discharge processing | | X | X | X |
| Test item | Unit | Results | | |
| Peeling strength | Kg/2.54 cm | 3.1 | 4.7 | 5.2 |
| | | | | |

| | | Embodiment 22 | Embodiment 23 | Embodiment 24 |
|---|---|---|---|---|
| Content of composition C (wt%) | | 10 | 20 | 30 |
| PU surface layer | | Water-based PU | | |
| Adhesive selection | | Non-solvent-based adhesive | | |
| Corona discharge processing | | X | X | X |
| Test item | Unit | Results | | |
| Peeling strength | Kg/2.54 cm | 4.5 | 6.9 | 7.1 |
| | | | | |

| | | Embodiment 25 | Embodiment 26 | Embodiment 27 |
|---|---|---|---|---|
| Content of compositions A: B: C (wt%) | | 48: 48: 4 | 32: 64: 4 | 64: 32: 4 |
| PU surface layer | | Water-based PU | | |
| Adhesive selection | | Non-solvent-based adhesive | | |
| Corona discharge processing | | X | X | X |
| Test item | Unit | Results | | |
| Peeling strength | Kg/2.54 cm | 1.7 | 1.2 | 22 |
| | | | | |

| | | Embodiment 28 | Embodiment 29 | Embodiment 30 |
|---|---|---|---|---|
| Content of compositions A: B: C (wt%) | | 48: 48: 4 | 32: 64: 4 | 64: 32: 4 |
| PU surface layer | | Water-based PU | | |
| Adhesive selection | | Solvent-based adhesive (solvent content 35%) | | |
| Corona discharge processing | | X | X | X |
| Test item | Unit | Results | | |
| Peeling strength | Kg/2.54 cm | 0.8 | 1.4 | 1.8 |

While several embodiments of the present disclosure have been illustrated and described, various modifications and improvements can be made by those skilled in the art. The embodiments of the present disclosure are therefore described in an illustrative but not in a restrictive sense. It is intended that the present disclosure should not be limited to the particular forms as illustrated and that all modifications which maintain the spirit and scope of the present disclosure are within the scope defined in the appended claims.

## Claims

1. An artificial leather, comprising:
a fabric layer;
a thermoplastic polyolefin layer disposed on the fabric layer;
a modified thermoplastic polyolefin layer disposed on the thermoplastic polyolefin layer; and
a polyurethane surface layer attached to the modified thermoplastic polyolefin layer through an adhesive.

2. The artificial leather of claim 1, wherein the modified thermoplastic polyolefin layer is a blend including thermoplastic polyolefin and maleic anhydride.

3. The artificial leather of claim 2, wherein a total weight of the modified thermoplastic polyolefin layer is calculated as 100wt%, and a content of the maleic anhydride is 3wt% to 50wt%.

4. The artificial leather of claim 1, wherein an adhesiveness of the modified thermoplastic polyolefin layer is greater than an adhesiveness of the thermoplastic polyolefin layer.

5. The artificial leather of claim 1, wherein the adhesive includes one of the following: solvent-based polyurethane resin, water-based polyurethane resin, thermoplastic polyurethane resin, ethylene-vinyl acetate copolymer adhesive, polyvinyl chloride adhesive, polyolefin adhesive, and epoxy resin adhesive.

6. An artificial leather, comprising:
a fabric layer;
a modified thermoplastic polyolefin layer disposed on the fabric layer;
a thermoplastic polyurethane layer disposed on the modified thermoplastic polyolefin layer; and
a polyurethane surface layer attached to the thermoplastic polyurethane layer through an adhesive.

7. The artificial leather of claim 6, wherein the modified thermoplastic polyolefin layer is a blend including thermoplastic polyolefin and maleic anhydride, a total weight of the modified thermoplastic polyolefin layer is calculated as 100wt%, and a content of the maleic anhydride is 3wt% to 50wt%.

8. A method for manufacturing an artificial leather, comprising:
providing a fabric layer;
forming a laminated structure on the fabric layer, wherein the laminated structure includes a modified thermoplastic polyolefin layer; and
attaching a polyurethane surface layer to the laminated structure through an adhesive.

9. The method of claim 8, wherein the modified thermoplastic polyolefin layer is a blend including thermoplastic polyolefin and maleic anhydride, and a water content of the maleic anhydride is 250PPM to 50PPM.

10. The method of claim 8, wherein after forming the laminated structure, the method further comprises:
performing a corona discharge processing on a surface of the modified thermoplastic polyolefin layer, wherein a processing current of the corona discharge processing is 3KW to 4.5KW.
